# FASCICULE DE BREVET EUROPEEN

(11) **EP 0 801 659 B1**
(45) Date de publication et mention de la délivrance du brevet: **10.03.1999**
(21) Numéro de dépôt: 95943247.7
(22) Date de dépôt: 20.12.1995
(51) Int. Cl.: C08F 279/02, C09D 151/04, C09J 151/04, D21H 19/58

(54) **POUDRES REDISPERSABLES DANS L'EAU DE POLYMERES FILMOGENES A STRUCTURE "COEUR/ECORCE"**
IN WASSER REDISPERGIERBARE FILMBILDENDE POLYMERISATE MIT EINEM KERN-SCHALE STRUKTUR
WATER REDISPERSIBLE POWDERS OF FILM-FORMING POLYMERS WITH A CORE/SHELL STRUCTURE

(30) Priorité: 06.01.1995 FR 9500086
(43) Date de publication de la demande: 22.10.1997
(73) Titulaire: RHODIA CHIMIE, 92408 Courbevoie Cédex (FR)
(72) Inventeur: BETT, Bill, F-75011 Paris (FR); RICHARD, Joel, F-49160 Blou (FR)
(74) Mandataire: Dubruc, Philippe
(86) Numéro de dépôt international: FR9501699
(87) Numéro de publication internationale: WO9620963

(56) Documents cités:
- EP-A- 0 522 791
- US-A- 4 937 280
- DATABASE WPI Section Ch, Week 9108 Derwent Publications Ltd., London, GB; Class A82, AN 91-055066 XP002000092 & JP,A,03 006 269 ( HONEY CHEM IND KK) , 11 Janvier 1991

## Description

La présente invention concerne les poudres redispersables dans l'eau de polymères filmogènes à structure "coeur/écorce".

Plus particulièrement, les polymères filmogènes sont préparés par polymérisation en émulsion aqueuse de monomères à insaturation éthylénique.

On connaît déjà des poudres redispersables de type ci-dessus qui sont obtenues généralement par pulvérisation-séchage de latex de polymères. Ces poudres présentent un grand intérêt commercial car elles peuvent être commercialisées telles quelles aux différents utilisateurs qui les redispersent dans l'eau pour préparer des formulations adaptées aux utilisations classiques des latex, à savoir notamment la préparation de compositions de couchage de papier, de compositions de peinture, de revêtements adhésifs (adhésifs sensibles à la pression, colles-carrelages) et additifs à des liants hydrauliques du type mortiers ou bétons.

On comprend que la vente de telles poudres redispersables par l'utilisateur en un pseudo ou néo-latex présente, par rapport à la vente du latex de départ, l'immense avantage de ne pas comporter d'eau qui constitue généralement au moins 50 % du poids du latex, ce qui entraîne des économies de transport et de manutention considérables.

Toutefois de telles poudres doivent présenter les propriétés suivantes pour être commercialisables :
- elles doivent être stables au stockage,
- elles doivent être aisément redispersables dans l'eau à température ambiante et générer un néo-latex de granulométrie resserrée et adaptée à l'application visée,
- pour l'application additif aux liants hydrauliques plus particulièrement visée pour la présente invention, il faut que l'additif issu de la poudre redispersable soit compatible avec le liant hydraulique, permette au liant hydraulique de prendre en masse sans retarder le processus de prise et conférer aux revêtements comportant le liant additivé, une adhérence correcte aux supports habituels même à l'état humide, ainsi que de bonnes propriétés mécaniques.

La présente invention propose une poudre redispersable présentant l'ensemble des propriétés désirées indiquées ci-dessus dans les applications classiques des latex et plus particulièrement dans les compositions de revêtement et d'additifs pour liant hydraulique en particulier pour ciment Portland.

Elle concerne en effet une poudre redispersable dans l'eau à base de polymères filmogènes sensiblement insolubles et préparés par polymérisation en émulsion aqueuse de monomères à insaturation éthylénique et à structure "coeur/écorce" comportant un coeur hydrophobe , à base d'un polymère présentant une Tg (température de transition vitreuse) comprise entre - 30 et + 25 °C, de préférence entre - 10 et 20 °C et une écorce hydrophile à base d'un polymère présentant une Tg supérieure à 55°C, de préférence supérieure à + 90°C, caractérisée en ce que l'écorce est liée au coeur par des liaisons covalentes résultant de la réaction d'un agent de greffage de l'écorce sur les insaturations éthyléniques subsistant dans le coeur et est sensiblement insoluble en milieu alcalin.

La présente invention conceme aussi un procédé de préparation d'une poudre redispersable conforme à l'invention ainsi que l'utilisation de ladite poudre.

L'invention concerne tout d'abord une poudre redispersable dans l'eau à base de polymères filmogènes sensiblement insolubles et préparés par polymérisation en émulsion aqueuse de monomères à insaturation éthylénique et à structure "coeur/écorce" comportant un coeur hydrophobe , à base d'un polymère présentant une Tg (température de transition vitreuse) comprise entre - 30 et + 25 °C, de préférence entre - 10 et 20 °C et une écorce hydrophile à base d'un polymère présentant une Tg supérieure à 55°C, de préférence supérieure à + 90°C, caractérisée en ce que l'écorce est liée au coeur par des liaisons covalentes résultant de la réaction d'un agent de greffage de l'écorce sur les insaturations éthyléniques subsistant dans le coeur et est sensiblement insoluble en milieu alcalin.

La poudre selon l'invention se compose de particules à base de polymères filmogènes insolubles dans l'eau présentant une structure coeur/écorce. Ces particules à structure coeur/écorce sont constituées d'un coeur formé d'un polymère hydrophobe et mou c'est-à-dire présentent une Tg comprise entre - 30 et + 25 °C, de préférence entre - 10 et + 20 °C qui comporte des insaturations éthyléniques subsistantes, et d'une écorce à base d'un polymère dur, hydrophile présentant une Tg supérieure à 55 °C, de préférence supérieure à 90°C. L'écorce est liée au coeur par des liaisons covalentes résultant de la réaction d'un agent de greffage de l'écorce sur les insaturations éthyléniques subsistant dans le coeur.

La température de transition vitreuse est déterminée par la méthode d'analyse thermique différentielle.

De telles particules de polymères coeur/écorce sensiblement insolubles dans l'eau sont préparées en général à partir d'un latex de polymère par un procédé de polymérisation en deux étapes tel que par exemple celui décrit dans le brevet US-A 4 876 313 cité comme référence selon lequel on prépare, au cours d'une première étape, le coeur formé d'un polymère hydrophobe et mou et, au cours d'une deuxième étape, on greffe sur le coeur l'écorce formée d'un polymère dur et hydrophile.

De préférence, le coeur est préparé par polymérisation d'un mélange de monomères comportant de 99,9 à 92 % d'un monomère choisi parmi le styrène, le butadiène, et les acrylates ou méthacrylates d'alkyle en C₁-C₁₂.

Le caractère plus ou moins hydrophobe du coeur peut être généralement réglé par l'addition au mélange de monomères de 0,1 à 8 % en poids d'au moins un monomère choisi parmi un acide carboxylique à insaturation éthylénique, tel que l'acide acrylique, l'acide méthacrylique, l'acide itaconique, l'acide maléique, l'acide fumarique, ou d'un monomère ester d'acide carboxylique insaturé à fonction hydroxyalkyle comme l'acrylate d'hydroxyéthyle et l'acrylate d'hydroxypropyle ou un monomère à fonction amide choisi par exemple parmi le méthylol-acrylamide, l'acrylamide, la méthacrylamide et la méthylméthacrylamide.

De préférence, le coeur est préparé par polymérisation d'un mélange de monomères à base de styrène et de butadiène.

L'homme du métier sait choisir les quantités respectives de monomères "durs" (par exemple styrène et méthacrylate de méthyle) et de monomères "mous" (par exemple butadiène et acrylate de butyle) en vue d'obtenir un polymère ayant la Tg désirée comprise entre - 30 et + 25 °C.

Les monomères mis en oeuvre au cours de cette première étape peuvent être introduits en mélange ou séparément et simultanément dans le milieu réactionnel, soit avant le début de la polymérisation en une seule fois, soit au cours de la polymérisation par fractions successives ou en continu.

La polymérisation des monomères formant le coeur est mise en oeuvre en présence d'un émulsifiant et d'un initiateur de polymérisation.

En tant qu'agent émulsifiant, on met en oeuvre généralement les agents anioniques classiques représentés notamment par les sels d'acides gras, les alkylsulfates, les alkylsulfonates, les alkylarylsulfates, les alkylarylsulfonates, les arylsulfates, les arylsulfonates, les sulfosuccinates, les alkylphosphates de métaux alcalins. Ils sont employés à raison de 0,01 à 5% en poids par rapport au poids total des monomères.

L'initiateur de polymérisation en émulsion, qui est hydrosoluble, est représenté plus particulièrement par les hydroperoxydes tels que l'eau oxygénée, l'hydroperoxyde de tertiobutyle et par les persulfates tels que le persulfate de sodium, le persulfate de potassium, le persulfate d'ammonium. Il est employé en quantités comprises entre 0,05 et 2% en poids par rapport au total des monomères. Ces initiateurs sont éventuellement associés à un réducteur, tel que le bisulfite ou le formaldéhydesulfoxylate de sodium, les polyéthylèneamines, les sucres : dextrose, saccharose, les sels métalliques. Les quantités de réducteur utilisés varient de 0 à 3% en poids par rapport au poids total des monomères.

La température de réaction, fonction de l'initiateur mis en oeuvre, est généralement comprise entre 0 et 100°C, et de préférence, entre 50 et 80°C.

On peut utiliser un agent de transfert dans des proportions allant de 0 à 3% en poids par rapport au(x) monomère(s), généralement choisi parmi les mercaptans tels que le n-dodécylmercaptan, le tertiododécylmercaptan ; le cyclohexène ; les hydrocarbures halogénés tels que le chloroforme, le bromoforme, le tétrachlorure de carbone.

A la fin de la première étape de préparation du coeur, on débute la deuxième étape de préparation de l'écorce en ajoutant directement au latex comportant les particules de coeur, un mélange de monomères adapté pour réaliser une écorce dure et hydrophile qui consiste en un polymère présentant une Tg supérieure à 55°C, de préférence supérieure à 90°C.

Par ailleurs, au cours de la deuxième étape, on ajoute au cours de la polymérisation en émulsion une quantité efficace d'un agent de greffage pour lier par des liaisons covalentes l'écorce aux insaturations éthyléniques subsistant dans le coeur afin de greffer solidement l'écorce sur le coeur.

De 40 à 95 % en poids des monomères de base de l'écorce sont choisis parmi le styrène, un acrylate ou méthacrylate d'alkyle en C₁-C₁₂. Le (méth)acrylate d'alkyle peut être par exemple choisi parmi le (méth)acrylate d'éthyle, le (méth)acrylate de butyle, le (méth)acrylate d'éthyl-2 hexyle.

Le caractère hydrophile de l'écorce et son caractère d'insolubilité en milieu alcalin (par exemple pH supérieur ou égal à 8) peuvent être réglés en puant sur la nature et le taux des monomères de l'écorce. Ils peuvent être réglés notamment en ajoutant de 4,5 à 55% en poids d'un monomère choisi parmi les acides carboxyliques à insaturation éthyléniques, les monomères à fonction amide et les monomères à fonction hydroxyalkyle. Ces monomères permettant de régler le caractère hydrophile de l'écorce peuvent être les mêmes que ceux utlilisés pour régler (c'est-à-dire diminuer) le caractère hydrophobe du coeur. Le point important est que l'écorce doit avoir un caractère hydrophile sensiblement plus élevé que le coeur et doit être également insoluble en milieu alcalin.

Selon un mode préféré, l'écorce est préparée par polymérisation en émulsion sur les particules de coeur d'un mélange de monomères, comportant de 40 à 95 % en poids d'un monomère choisi parmi le styrène, et un acrylate ou méthacrylate d'alkyle en C₁ - C₁₂, de 4,5 à 55 % en poids d'un monomère choisi parmi un acide carboxylique à insaturation éthylénique, un ester d'acide carboxylique insaturé à fonction hydroxyalkyle et un monomère à fonction amide et de 0,5 à 5 % en poids d'un agent de greffage choisi parmi les esters (méth)allyliques de l'acide (meth)acrylique, les esters (méth)allyliques des mono et diesters des acides maléique, fumarique et itaconique, ainsi que les dérivés alkéniques des amides des acides acryliques et méthacryliques, tels que le N-méthallylmaléimide.

L'homme du métier sait choisir les quantités respectives de monomères "durs" (par exemple styrène et méthacrylate de méthyle) et de monomères "mous" (par exemple butadiène et acrylate de butyle) en vue d'obtenir un polymère ayant la Tg désirée supérieure à 55 °C.

Le milieu de polymérisation contient en outre un agent de greffage en quantité suffisante et suffisamment réactif pour créer des liaisons covalentes entre l'écorce et des liaisons éthyléniques présentes dans le coeur.

Cet agent de greffage est constitué par un composé organique comportant au moins deux insaturations éthyléniques présentant des réactivités différentes lors des réactions de polymérisation en émulsion, l'insaturation la plus réactive réagissant avec les monomères de telle sorte que l'agent de greffage fasse partie intégrante du polymère constituant l'écorce, l'autre insaturation étant insuffisamment réactive pour se polyadditionner avec les insaturations éthyléniques des autres monomères mais étant suffisamment réactives pour réagir avec les doubles liaisons subsistantes du coeur pour lier l'écorce au coeur par des liaisons covalentes.

Comme agent de greffage efficace on peut citer les esters alkéniques et plus particulierement (méth)allyliques de l'acide (méth)acrylique tel que l'allylméthacrylate, l'allylacrylate, les esters (méth)allyliques des mono et diesters des acides maléique, fumarique et itaconique, ainsi que les dérivés alkéniques des amides des acides acryliques et méthacryliques, tels que le N-méthallylmaléimide.

L'agent de greffage est ajouté selon une quantité comprise généralement entre 0,2 et 4, de préférence 0,5 à 3% en poids du poids de monomère de l'écorce.

Comme pour le coeur, la polymérisation est effectuée en présence d'un émulsifiant et d'un initiateur de polymérisation.

L'initiateur de polymérisation est de préférence organophile et présente une forte affinité pour les particules de polymère constituant le coeur de manière à améliorer le greffage. Il s'agit généralement d'un peroxyde ou d'un perester tel que notamment l'hydroperoxyde de cumène, le peroxyde de dicumyle, le tertio-butyle pernéodécanoate, le tertiobutyle per-3,5,5-triméthylhexanoate, le peroxyde de bis (3,5,5-triméthylhexanoyle), le peroxyde de dioctanoyle, le peroxyde de dilauroyle et le peroxyde de dibenzoyle. On recommande plus particulierement d'utiliser l'association tert-butyl perbenzoate/acide ascorbique suivant une teneur pondérale de 0,5 à 5% en poids de l'association par rapport au poids total des monomères.

Il est à noter que si à la place de l'initiateur organophile on utilise un initiateur hydrosoluble, tel que le persulfate d'ammonium, on obtient une poudre à redispersibilité médiocre.

Il est souhaitable d'utiliser un agent de transfert pour ajuster les masses molaires du polymère de l'écorce. On peut utiliser les mêmes agents de transfert que ceux cités ci-dessus pour préparer le coeur ainsi que les alcanoates (C₁-C₆) d'alkyl(C₁-C₁₂)mercaptans, tel que le méthylmercapto propionate.

La polymérisation en émulsion de l'écorce s'effectue dans des conditions similaires à celles du coeur.

Le latex obtenu présente généralement une granulométrie comprise entre 0,1 et 0,3 µm.

De préférence l'écorce constitue de 50 à 5 % de préférence de 30 à 10 % en poids du poids total coeur + écorce.

La poudre redispersable selon l'invention peut comprendre en outre au moins une charge minérale qui présente de préférence une granulométrie inférieure à 10 µm environ, de préférence inférieure à 3 µm.

Comme charge minérale, on recommande d'utiliser une charge choisie notamment parmi le carbonate de calcium, le kaolin, le sulfate de baryum, l'oxyde de titane, le talc, l'alumine hydratée, la bentonite, la silice et le sulfoaluminate de calcium (blanc satin).

La poudre peut comprendre pour 100 parties en poids de polymères filmogènes, de 0,5 à 40, de préférence de 2 à 20 parties en poids de ladite charge.

A tout ou partie de la charge, on peut substituer au moins un saccharide partiellement hydrosoluble qui peut être en particulier du glucose, fructose, galactose, dextrose, arabinose, sucrose, mannose, lactose et de la glycine. Les saccharides utilisés présentent de préférence un point de fusion supérieur à 100°C et une solubilité comprise entre 50 et 500 g/l.

Le lactose, le galactose et le mannose sont les saccharides préférés car ils présentent un point de fusion supérieur à 100°C.

La poudre redispersable peut comporter de 0,5 à 30, de préférence 5 à 20 parties en poids de saccharide pour 100 parties de polymères filmogènes.

On peut ajouter cette charge minérale et/ou le saccharide directement à la poudre redispersable ou lors de sa préparation.

La présente invention conceme également le procédé de préparation de la poudre redispersable selon l'invention qui consiste à :
- éliminer l'eau d'une émulsion aqueuse constitué desdits polymères filmogènes sensiblement insolubles dans l'eau préparés par polymérisation en émulsion dont le pH est réglé entre 5 et 8, et comprenant éventuellement des quantités adaptées de charge minérale et de saccharide,
- et pulvériser le résidu sec obtenu en une poudre à la granulométrie désirée.

On part d'une émulsion aqueuse de polymère filmogène insoluble dans l'eau obtenue par polymérisation en émulsion telle que définie précédemment. Ce type d'émulsion est communément appelée latex.

On peut ajouter à cette émulsion aqueuse les autres composants de la composition pulvérulente : saccharide et charge minérale. Les teneurs respectives des divers constituants sont choisies de telle sorte que les compositions pulvérulentes séchées présentent la composition définie auparavant.

L'eau de cette émulsion est ensuite éliminée et le produit obtenu pulvérisé pour obtenir une poudre. Les étapes d'élimination de l'eau de l'émulsion de latex et d'obtention d'une poudre peuvent être séparées ou concomitantes. Ainsi, on peut utiliser un procédé de congélation, suivie d'une étape de sublimation, ou de lyophilisation, de séchage ou de séchage par atomisation (séchage/pulvérisation).

Le séchage par atomisation est le procédé préféré car il permet d'obtenir directement la poudre à la granulométrie désirée sans passer nécessairement par l'étape de broyage. La granulométrie de la poudre est généralement inférieure à 500 µm, de préférence inférieure à 100 µm.

Le séchage par atomisation peut s'effectuer de manière habituelle dans tout appareil connu tel que par exemple une tour d'atomisation associant une pulvérisation réalisée par une buse ou une turbine avec un courant de gaz chaud.

La température d'entrée du gaz chaud (en général de l'air), en tête de colonne, est de préférence comprise entre 100 et 115°C et la température de sortie est de préférence comprise entre 55 et 65°C.

La charge minérale et le saccharide peuvent être ajoutés à l'émulsion aqueuse de polymère de départ ou encore directement à la composition pulvérulente finale.

De préférence, tout ou partie de la charge minérale est introduite lors de l'étape de pulvérisation dans le procédé de séchage par atomisation (séchage/pulvérisation).

La présence de ces charges minérales dans l'émulsion favorise la préparation de la poudre et sa stabilité au stockage en évitant l'agrégation de la poudre, c'est-à-dire son mottage.

Dans la plupart des cas, les poudres selon l'invention sont totalement redispersables dans l'eau à température ambiante par simple agitation. Par totalement redispersable, on entend une poudre conforme à l'invention qui après addition d'une quantité adaptée d'eau permet d'obtenir un pseudo-latex dont la granulométrie des particules est sensiblement identique à la granulométrie des particules de latex présentes dans l'émulsion de départ.

Les poudres obtenues sont stables au stockage ; elles peuvent être aisément redispersées dans l'eau sous forme de pseudo-latex et utilisées directement sous forme de poudre ou sous forme de pseudo-latex dans tous les domaines d'application connus des latex.

Elles conviennent tout particulièrement dans l'industrie du bâtiment comme additifs aux mélanges de liants minéraux hydrauliques pour la réalisation d'enduits de protection et de décoration, des mortiers-colles et des ciments-colles destinés à la pose de carrelages et de revêtements de sols où elles sont utilisées à un taux pondéral de 1 à 10 %, de préférence de 2 à 5 %. Elles s'avèrent particulièrement bien adaptées à la préparation de produits en poudre prêts à l'emploi à base de ciment ainsi que de plâtre.

Les poudres de l'invention ou les pseudo-latex en dérivant sont utilisables en outre dans tous les autres domaines d'application des latex, plus particulièrement dans le domaine des adhésifs, du couchage du papier et des peintures. Les poudres selon l'invention peuvent comporter en outre les additifs usuels, en particulier des biocides, des microbiostats, des bactériostatiques, et des anti-mousses silicones et organiques.

Dans ce qui suit ou ce qui précède, les parties et pourcentages sont exprimés en poids, sauf indication contraire.

### EXEMPLES

### Exemple comparatif 1 : préparation de l'écorce sans agent de greffage

On dilue avec 120 g d'eau déionisée 3 kg d'un latex carboxylé (C) styrène/butadiène à 50% d'extrait sec préparé par polymérisation en émulsion d'un mélange de 37% de butadiène, 59% de styrène et 4% d'acide acrylique.

On chauffe sous agitation le latex dilué à 75(±1)°C dans un réacteur en verre comportant un condenseur et des tubes d'alimentation en réactifs. On introduit dans le réacteur à 68(±1)°C, du persulfate d'ammonium (2g) dissous dans de l'eau désionisée (20g).

On introduit ensuite pendant 3 heures à une température maintenue à 75(±1)°C dans le réacteur un mélange de monomères constitué de styrène (114,6g), d'acide méthacrylique (39g) ainsi qu'un agent de transfert qui est du mercaptométhyl propionate (MMP : 5,4 g).

En parallèle, on ajoute au réacteur du persulfate d'ammonium (2g) dissous dans 19 g d'eau déionisée durant 3 heures 30 minutes.

Le latex final obtenu est porté à 82(±1)°C pendant 1 heure, refroidi et déchargé du réacteur.

### Exemple comparatif 2 : préparation de l'écorce sans initiateur

On répète exactement le mode opératoire de l'exemple 1 sauf que le mélange de monomères ajouté au latex dilué contient en outre du méthacrylate d'allyle (1g).

### Exemple comparatif 3 : préparation de l'écorce sans agent de greffage

On part du même latex dilué (C) selon les mêmes quantités et dans le même réacteur qu'à l'exemple 1.

On chauffe le latex dilué sous agitation à 80(±1)°C.

On introduit dans le réacteur à 68(±1)°C du persulfate d'ammonium (2g) dissous dans de l'eau déionisée (20g).

On introduit ensuite pendant 15 minutes à une température maintenue à 75 (±1)°C 20g d'un mélange de monomères constitué de styrène (114,6g), d'acide méthacrylique (39g) et du tertbutyl perbenzoate (3,0g) dans 20g d'eau déionisée.

La partie restante du mélange de monomères ci-dessus est alors introduite dans le réacteur en maintenant sa température à 80(±1)°C. En parallèle, on ajoute au réacteur de l'acide ascorbique (1,5g) dissous dans 50g d'eau déionisée pendant 3 heures 30 minutes. Après introduction du mélange de monomères, on porte le mélange réactionnel pendant 1 heure à 85(±1)°C On le refroidit et on le décharge.

### Exemple 4 : préparation de l'écorce en présence d'un agent de greffage et d'un initiateur

On répète exactement le mode opératoire de l'exemple 3 sauf que le mélange de monomères ajouté au latex (C) dilué contient en outre du méthacrylate d'allyle (1g).

### Exemple 5 : évaluation de la redispersabilité

On ajuste le pH des latex obtenus par la mise en oeuvre des exemples 1 à 4 avec une solution de la soude caustique à 10%. A partir de ces latex on prépare des films sur plaque de verre en enduisant la plaque avec une barre de Meyer n°7. On chauffe les films à 60(±1)°C pendant 2 minutes. Après refroidissement à la température ambiante, on évalue la redispersabilité des films de la manière suivante :

On place de l'eau déionisée (0,25ml) à la surface du film et on note le temps nécessaire pour obtenir la décoloration.

On note également la couleur de la dispersion obtenue. Cette couleur va du bleu (redispersion complète) au blanc (redispersion partielle).

On examine le film redispersé après 5 minutes et on estime le pourcentage des particules de granulométrie supérieure à 43 µm.

On classe les films en fonction de leur couleur et de la quantité de matière non redispersée.

A titre comparatif, on évalue également la redispersabilité du latex de départ styrène/butadiène carboxylé (C) utilisé à l'exemple 1. Les films de latex stryrène/butadiène carboxylé (C) à pH 3, pH 6 et pH 9 ne réagissent pas avec l'eau.

Les résultats obtenus sont rassemblés dans le tableau 1 (séchage à 60°C) et dans le tableau 2 ci-après (séchage à 100°C).

**TABLEAU 1**

| Film de latex chauffé 2 minutes à 60°C | | | | |
|---|---|---|---|---|
| **Latex utilisé** | **pH** | **Temps pour la décoloration** | **Couleur obtenue** | **% particules de taille supérieure à 43 µm** |
| **Latex (C) de départ de l'exemple 1** | 4,0 | A,néant | A, - | 100 % |
| **Exemple 1** | 2,0 | A, néant | A, - | 100 % |
| " | 6,0 | instantané | blanc | 70 % |
| " | 9,0 | " | " | 60 % |
| **Exemple 2** | 2,0 | A, néant | A,- | 100 % |
| " | 6,0 | instantané | trouble | 70 % |
| " | 9,0 | " | blanc | 70 % |
| **Exemple 3** | 2,0 | A, néant | A, - | 100 % |
| " | 6,0 | instantané | blanc | 40 % |
| " | 9,0 | " | trouble | 70 % |
| **Exemple 4** | 2,0 | instantané | blanc | 40 % |
| " | 6,0 | " | bleu | < 10 % |
| " | 9,0 | " | blanc | 30 % |
| A : absence de redispersion | | | | |

**TABLEAU 2**

| Film de latex chauffé 2 minutes à 100°C | | | | |
|---|---|---|---|---|
| **Latex utilisé** | **pH** | **Temps pour la décoloration** | **Couleur obtenue** | **% particules de taille supérieure à 43 µm** |
| **Latex (C) de départ de l'exemple 1** | 4,0 | néant | - | 100 |
| **1** | 9,0 | instantané | blanc | 60 % |
| **2** | 9,0 | instantané | blanc | 70 % |
| **3** | 6,0 | instantané | blanc | 70 % |
| **4** | 6,0 | instantané | bleu | < 10 % |

### Exemple 6 : préparation d'une poudre redispersable

On introduit 10 kg de latex styrène/butadiène carboxylé (C) à 50% d'extrait sec, utilisés comme matière première à l'exemple 1 dans un réacteur en acier inoxydable.

On prépare un mélange de monomères comportant 25,3g de MMP (mercapto méthyl proprionate), 537,0g de styrène, 183,0g d'acide méthacrylique et 4,7g de méthacrylate d'allyle.

Dès que la température du réacteur a atteint 30(±1)°C, on ajoute 12 % du mélange de monomères ci-dessus et 15g de tertiobutylperbenzoate. On poursuit le chauffage et, quand la température s'est stabilisée à 80(±1)°C, on ajoute le reste du mélange de monomères. En parallèle, on ajoute pendant 3 heures et 45 minutes une solution de 7,5g d'acide ascorbique dans l'eau déionisée. Le latex résultant a les caractéristiques suivantes :
- teneur en extrait sec : 51,0%
- viscosité : 194 mPa.s
- pH : 4,9
- granulométrie: 225 nanométres et 350 ppm des grains (COULTER NANOSIZER) ont une granulométrie supérieure à 45 µm.

On filtre le latex résultant à travers un tamis de mailles 45 µm et on le sèche par pulvérisation avec l'addition concomitante de kaolin après avoir réglé le pH à 6,0.

On obtient une poudre s'écoulant bien et présentant de bonnes propriétés lorsqu'elles sont utilisées dans les mortiers standards.

### Exemples 7 et 8 : préparation de poudres redispersables

On répète exactement le mode opératoire de l'exemple 6 mais avec une taille d'écorce de 20 % (exemple 7) et de 30% (exemple 8) en poids par rapport au poids total de la particule de latex (coeur + écorce). Après pulvérisation séchage, on obtient également une poudre s'écoulant bien et redispersable.

### Exemple comparatif 9 : préparation séparée du copolymère styrène/acide méthacrylique de l'écorce

On charge dans un réacteur de 2 litres de l'eau déionisée (900 g), 1g d'un tensioactif (NANSA SB G2 ® à 13,4%) et on chauffe à 70°C(±1)°C sans agitation. On prépare en même temps une pré-émulsion de monomères à partir de 69,5g d'eau déionisée, 189,6g de styrène, 81,3g d'acide méthacrylique, 9,6g de méthylmercaptoproprionate (MMP) et 1g de tensio-actif (AD 33 ® à 37%).

On ajoute cette pré-émulsion au réacteur à une température de 70(±1)°C. On ajoute ensuite 1 ml d'une solution de sulfate ferreux, 3,73 g de tertbutyl perbenzoate à 75% et 2,5g de GOBACITE ® (formaldéhyde sulfoxylate de sodium) dissoute dans 15g d'eau déionisée.

On ajoute encore 2 fois le même système redox au bout d'une heure puis de 2 heures de polymérisation. On refroidit et on décharge le latex résultant.

On mélange 100 g de latex styrène/butadiène carboxylé (C) utilisé aux exemples 1 et 5 avec 100 g du latex tel que préparé ci-dessus neutralisé et on mesure la redispersabilité du film séché. A pH 6 ou après réglage du pH entre 8 et 12 avec NaOH à 10%, on trouve une redispersabilité médiocre.

### Exemple comparatif 10 : préparation séparée de copolymère styrène/acide méthacrylique de l'écorce et simple mélange avec le copolymère du coeur

On répète exactement le mode opératoire de l'exemple 9, sauf que le latex de départ est préparé à partir d'un mélange de monomères comportant 20% en poids d'acide méthacrylique.

On neutralise le produit à un pH de 12,0 par addition d'un mélange de 5,6g d'hydroxyde de calcium et d'une solution à 50 % d'hydroxyde de sodium (12,0g) dissous dans 50 g d'eau déionisée.

On chauffe le mélange à 65-70 °C pendant 2 heures. Le polymère est insoluble à pH 12,0.

On mélange 100 g de latex styrène/butadiène carboxylé (C) utilisé aux exemples 1 et 5 avec 100 g du latex tel que préparé ci-dessus neutralisé et on mesure la redispersabilité du film séché. A pH 6 ou après réglage du pH entre 8 et 12 avec NaOH à 10%, on trouve une redispersabilité médiocre.

## Revendications

1. Poudre redispersable dans l'eau à base de polymères filmogènes sensiblement insolubles dans l'eau et préparés par polymérisation en émulsion aqueuse de monomères à insaturation éthylénique à structure "coeur/écorce" comportant un coeur hydrophobe à base d'un polymère présentant une Tg (température de transition vitreuse) comprise entre- 30 et + 25 °C, de préférence entre - 10 et + 20 °C, et une écorce hydrophile à base d'un polymère présentant une Tg supérieure à + 55 °C, de préférence supérieure à + 90 °C, caractérisée en ce que l'écorce est liée au coeur par des liaisons covalentes résultant de la réaction d'un agent de greffage de l'écorce sur les insaturations éthyléniques subsistant dans le coeur et est sensiblement insoluble en milieu alcalin.

2. Poudre redispersable selon la revendication 1, caractérisée en ce que le coeur est préparé par polymérisation d'un mélange de monomère comportant de 99,9 à 92 % d'un monomère choisi parmi le styrène, le butadiène et les acrylates et méthacrylates d'alkyle en C₁-C₁₂, et de 0,1 à 8 % d'au moins un monomère choisi parmi un acide carboxylique à insaturation éthylénique, un ester d'acide carboxylique insaturé à fonction hydroxyalkyle et un monomère à fonction amide.

3. Poudre redispersable selon la revendication 1 ou 2, caractérisée en ce que le coeur est préparé par polymérisation d'un mélange de monomère à base de styrène et de butadiène.

4. Poudre redispersable selon l'une quelconque des revendications précédentes, caractérisée en ce que l'écorce est préparée par polymérisation en émulsion sur les particules de coeur d'un mélange de monomères, comportant de 40 à 95 % en poids d'un monomère choisi parmi le styrène, et un acrylate au méthacrylate d'alkyle en C₁ - C₁₂, de 4,5 à 55 % en poids d'un monomère choisi parmi un acide carboxylique à insaturation éthylénique, un ester d'acide carboxylique insaturé à fonction hydroxyalkyle et un monomère à fonction amide et de 0,5 à 5 % en poids d'un agent de greffage choisi parmi les esters (méth)allyliques de l'acide (meth)acrylique, les esters (méth)allyliques des mono et diesters des acides maléique, fumarique et itaconique, ainsi que les dérivés alkéniques des amides des acides acryliques et méthacryliques, tels que le N-méthallylmaléimide.

5. Poudre redispersable selon la revendication 4, caractérisée en ce que l'écorce est préparée par polymérisation en émulsion sur les particules de coeur en présence d'au moins un initiateur organophile.

6. Poudre redispersable selon la revendication 5, caractérisée en ce que l'initiateur organophile est choisi parmi un peroxyde ou un perester tel que notamment l'hydroperoxyde de cumène, le peroxyde de dicumyle, le tertio-butyle perméodécanoate, le tertio-butyle per-3,5,5-triméthylhexanoate, le peroxyde de bis (3,5,5-triméthylhexanoyle), le peroxyde de dioctanoyle, le peroxyde de dilauroyle et le peroxyde de dibenzoyle.

7. Poudre selon l'une quelconque des revendications précédentes, caractérisée en ce qu'elle comporte pour 100 parties en poids de polymères filmogènes de 0,5 à 40, de préférence de 2 à 20 parties d'au moins une charge minérale en poudre de granulométrie inférieure à 10 µm, de préférence inférieure à 3 µm.

8. Poudre selon l'une quelconque des revendications précédentes, caractérisée en ce qu'elle comporte pour 100 parties en poids de polymères filmogènes de 0,5 à 30, de préférence de 5 à 20 parties d'au moins un saccharide.

9. Procédé de préparation d'une poudre redispersable telle que définie à l'une quelconque des revendications 1 à 8, caractérisé en ce que :
- on élimine l'eau d'une émulsion aqueuse constituée desdits polymères filmogènes sensiblement insolubles dans l'eau préparés par polymérisation en émulsion dont le pH est réglé entre 5 et 8, et comprenant éventuellement des quantités adaptées de charge minérale et de saccharide,
- et on pulvérise le résidu sec obtenu en une poudre à la granulométrie désirée.

10. Procédé selon la revendication 9, caractérisé en ce que le procédé choisi est le procédé par séchage/pulvérisation.

11. Procédé selon la revendication 10, caractérisé en ce que tout ou partie de la charge minérale est ajoutée à l'étape de pulvérisation.

12. Pseudo latex obtenu par redispersion dans l'eau d'une poudre telle que définie à l'une quelconque des revendications 1 à 8.

13. Utilisation des pseudo latex définis à la revendication 12 et des poudres telles que définies aux revendications 1 à 8, comme additifs à des liants hydrauliques, des adhésifs, des compositions de couchage du papier et des peintures.

## Patentansprüche

1. In Wasser redispergierbares Pulver auf der Basis von in Wasser deutlich unlöslichen filmbildenden Polymeren und hergestellt durch Polymerisation in wäßriger Emulsion von ethylenisch ungesättigten Monomeren mit einer Kern/Schale-Struktur, umfassend einen hydrophoben Kern auf der Basis eines Polymeren mit einem Tg-Wert (Glasübergangstemperatur) zwischen -30 und +25°C, bevorzugt zwischen -10 und +20°C, und eine hydrophobe Schale auf der Basis eines Polymeren mit einem Tg-Wert von größer als +55°C, bevorzugt größer als + 90°C, dadurch gekennzeichnet, daß die Schale mit dem Kern durch kovalente Bindungen als Ergebnis der Reaktion eines Pfropfungsmittel der Schale mit den enthylenischen Unsättigungen, die im Kern verblieben sind, verbunden ist und deutlich unlöslich in alkalischem Medium ist.

2. Redispergierbares Pulver nach Anspruch 1, dadurch gekennzeichnet, daß der Kern durch Polymerisation eines Monomerengemisches, das 99,9 bis 92 % eines Monomeren, ausgewählt aus Styrol, Butadien und C₁-C₁₂-Alkylacrylaten und -methacrylaten, und 0,1 bis 8 % mindestens eines Monomeren, ausgewählt aus ethylenisch ungesättigter Carbonsäure, ethylenisch ungesättigtem Carbonsäureester mit einer Hydroxyalkylfunktion und einem Monomeren mit Amidfunktion umfaßt, hergestellt ist.

3. Redispergierbares Pulver nach Anspruch 1 oder 2, dadurch gekennzeichnet, daß der Kern durch Polymerisation eines Gemisches auf der Basis von Styrol und Butadien hergestellt ist.

4. Redispergierbares Pulver nach einem der vorstehenden Ansprüche, dadurch gekennzeichnet, daß die Schale durch Emulsionspolymerisation eines Gemisches aus Monomeren, das 40 bis 95 Gew.-% eines Monomeren, ausgewählt aus Styrol und einem C₁-C₁₂-Alkylacrylat und -methacrylat, 4,5 - 55 Gew.-% eines Monomeren, ausgewählt aus ethylenisch ungesättigter Carbonsäure, ethylenisch ungesättigtem Carbonsäureester mit einer Hydroxyalkylfunktion und einem Monomeren mit Amidfunktion, und 0,5 bis 5 Gew.-% eines Pfropfungsmittels ausgewählt aus (Meth)acrylsäure(meth)allylestern, (Meth)allylestern von Mono- und Diestern der Maleinsäure, Fumarsäure und Itaconsäure, sowie Alkenderivaten von Acrylsäure- und Methacrylsäureamiden, wie N-Methallylmaleimid, auf die Teilchen des Kerns hergestellt ist.

5. Redispergierbares Pulver nach Anspruch 4, dadurch gekennzeichnet, daß die Schale durch Emulsionspolymerisation auf die Teilchen des Kerns in Gegenwart mindestens eines organophilen Inititators hergestellt ist.

6. Redispergierbares Pulver nach Anspruch 5, dadurch gekennzeichnet, daß der organophile Inititator aus einem Peroxid oder einem Perester wie insbesondere Cumolhydroperoxid, Dicumylperoxid, tert. -Butyl-perneodecanoat, tert.-Butyl-per-3,5,5-trimethylhexanoat, Bis-(3,5,5-Trimethylhexanoyl) peroxid, Dioctanoylperoxid, Dilauroylperoxid und Dibenzoylperoxid ausgewählt ist.

7. Pulver nach einem der vorstehenden Ansprüche, dadurch gekennzeichnet, daß es auf 100 Gewichtsteile der filmbildenden Polymere 0,5 bis 40, bevorzugt 2 bis 20 Teile, mindestens eines pulverförmigen mineralischen Füllstoffs mit einer Korngrößenverteilung von kleiner 10 µm, bevorzugt kleiner 3 µm, umfaßt.

8. Pulver nach einem der vorstehenden Ansprüche, dadurch gekennzeichnet, daß es auf 100 Gewichtsteile der filmbildenden Polymeren 0,5 bis 30, bevorzugt 5 bis 20 Teile, mindestens eines Saccharids umfaßt.

9. Verfahren zur Herstellung eines redispergierbaren Pulvers wie in einem der Ansprüche 1 bis 8 definiert, dadurch gekennzeichnet, daß man - das Wasser aus einer wäßrigen Emulsion, die aus den in Wasser deutlich unlöslichen filmbildenden Polymeren besteht und durch Polymerisation einer Emulsion, deren pH-Wert auf einen Wert zwischen 5 bis 8 eingestellt wurde, hergestellt wurde und die gegebenenfalls angepaßte Mengen an mineralischem Füllstoff und Saccharid enthält,entfernt, - und den so erhaltenen trockenen Rückstand zu einem Pulver mit der gewünschten Korngrößenverteilung pulverisiert.

10. Verfahren nach Anspruch 9, dadurch gekennzeichnet, daß das ausgewählte Verfahren ein Verfahren durch Trocknung/ Pulverisation ist.

11. Verfahren nach Anspruch 10, dadurch gekennzeichnet, daß die Gesamtheit oder ein Teil des mineralischen Füllstoffs in der Stufe der Pulverisation zugesetzt wird.

12. Pseudolatex, erhalten durch Redispergieren eines Pulvers nach einem der Ansprüche 1 bis 8 in wasser.

13. Verwendung eines Pseudolatex nach Anspruch 12 und der Pulver nach den Ansprüchen 1 bis 8 als Additive zu hydraulischen Bindemitteln, Adhäsive, Ausrüstungszusammensetzungen für Papier und Anstrichmittel.

## Claims

1. A powder redispersible in water based on substantially water-insoluble filmogenic polymers prepared by polymerisation in aqueous emulsion of ethylenically unsaturated monomers with a 'core/shell layer' structure comprising a hydrophobic core based on a polymer having a Tg (vitreous transition temperature) of between -30 and +25°C, preferably between -10 and +20°C, and a hydrophilic shell based on a polymer having a Tg of higher than +55°C, preferably higher than +90°C, characterised in that the shell is joined to the core by covalent bonds resulting from the reaction of a grafting agent of the shell on the ethylenic unsaturations subsisting in the core and is substantially insoluble in an alkaline medium.

2. A redispersible powder according to claim 1 characterised in that the core is prepared by polymerisation of a mixture of monomers comprising from 99.9 to 92% of a monomer selected from styrene, butadiene and C₁-C₁₂ alkyl acrylates and methacrylates, and from 0.1 to 8% of at least one monomer selected from an ethylenically unsaturated carboxylic acid, an unsaturated carboxylic acid ester with a hydroxy alkyl function and a monomer with an amide function.

3. A redispersible powder according to claim 1 or claim 2 characterised in that the core is prepared by polymerisation of a mixture of monomers based on styrene and butadiene.

4. A redispersible powder according to any one of the preceding claims characterised in that the shell is prepared by polymerisation in emulsion on the core particles of a mixture of monomers comprising from 40 to 95% by weight of a monomer selected from styrene and a C₁-C₁₂ alkyl acrylate or methacrylate, from 4.5 to 55% by weight of a monomer selected from an ethylenically unsaturated carboxylic acid, an unsaturated carboxylic acid ester with a hydroxyalkyl function and a monomer with an amide function and from 0.5 to 5% by weight of a grafting agent selected from (meth)allyl esters of (meth)acrylic acid, (meth)allyl esters of mono and diesters of maleic, fumaric and itaconic acids, and alkene derivatives of amides of acrylic and methacrylic acids such as N-methallylmaleimide.

5. A redispersible powder according to claim 4 characterised in that the shell is prepared by polymerisation in emulsion on the core particles in the presence of at least one organophilic initiator.

6. A redispersible powder according to claim 5 characterised in that the organophilic initiator is selected from a peroxide or a perester such as in particular cumene hydroperoxide, dicumyl peroxide, tertio-butyl perneodecanoate, tertio-butyl per-3,5,5-trimethylhexanoate, bis (3,5,5-trimethylhexanoyl) peroxide, dioctanoyl peroxide, dilauryl peroxide and dibenzoyl peroxide.

7. A powder according to any one of the preceding claims characterised in that it comprises for 100 parts by weight of filmogenic polymers from 0.5 to 40 and preferably from 2 to 20 parts of at least one mineral filler in powder form of a grain size of less than 10 µm, preferably less than 3 µm.

8. A powder according to any one of the preceding claims characterised in that it comprises for 100 parts by weight of filmogenic polymers from 0.5 to 30 and preferably from 5 to 20 parts of at least one saccharide.

9. A process for the preparation of a redispersible powder as defined in any one of claims 1 to 8 characterised in that:
- the water is eliminated from an aqueous emulsion formed by said substantially water-insoluble filmogenic polymers prepared by emulsion polymerisation whose pH-value is regulated at between 5 and 8, and possibly comprising suitable amounts of mineral filler and saccharide, and
- the dry residue obtained is crushed to a powder of the desired grain size.

10. A process according to claim 9 characterised in that the process selected is a process using drying/crushing.

11. A process according to claim 10 characterised in that all or part of the mineral filler is added in the crushing step.

12. A pseudo latex obtained by redispersion in water of a powder as defined in any one of claims 1 to 8.

13. Use of the pseudo latexes as defined in claim 12 and the powders as defined in claims 1 to 8 as additives to hydraulic binding agents, adhesives, paper coating compositions and paints.
